# EUROPEAN PATENT APPLICATION

(11) **EP 4 725 818 A1**
(43) Date of publication of application: **15.04.2026**
(21) Application number: 24819261.9
(22) Date of filing: 31.05.2024
(51) Int. Cl.: B62K 5/08, B62K 5/05, B62K 5/10, B62K 25/16

(54) **VEHICLE**

(30) Priority: 08.06.2023 JP 2023094654
(71) Applicant: Chiba Institute of Technology, Narashino-shi, Chiba 275-0016 (JP)
(72) Inventor: OGIHARA, Kazuki, Narashino-shi, Chiba 275-0016 (JP); HOKOI, Takaaki, Narashino-shi, Chiba 275-0016 (JP); TODA, Kengo, Narashino-shi, Chiba 275-0016 (JP); MATSUZAWA, Takaaki, Narashino-shi, Chiba 275-0016 (JP); YAMATO, Hideaki, Narashino-shi, Chiba 275-0016 (JP); KODACHI, Takashi, Narashino-shi, Chiba 275-0016 (JP); FURUTA, Takayuki, Narashino-shi, Chiba 275-0016 (JP)
(74) Representative: Stöckeler, Ferdinand
(86) International application number: PCT/JP2024/019981
(87) International publication number: WO 2024/253031

(57) **Abstract**

Provided is a vehicle configured so that a space can be formed between a handlebar and a wheel and the degree of freedom in designing the vehicle can be improved. A three-wheeled motorcycle 1 includes a saddle 2 on which a human body is seated, at least three wheels 3 having a pair of left and right front wheels 31 and a rear wheel 32, a handlebar 4 that steers the wheels 3, and a frame 5 supporting the wheels 3 and the handlebar 4. The three-wheeled motorcycle 1 includes a hub center steering mechanism having a pair of left and right swing arms 51 supported by the frame 5 and swinging the front wheels 31 in an up-down direction and a steering link 53 connecting the handlebar 4 and hubs of the front wheels 31 and steering the front wheels 31 based on operation of the handlebar 4.

## Description

### TECHNICAL FIELD

The present invention relates to a vehicle including at least three wheels.

### BACKGROUND ART

Conventionally, there has been known a vehicle including a seating portion on which a human body is seated, at least three wheels, a handlebar that steers the wheels, and a frame supporting the wheels and the handlebar (see, for example, Patent Literature 1). The vehicle described in Patent Literature 1 has a pair of left and right rear wheels, and the pair of left and right rear wheels includes a lean device (differential lean mechanism) that lowers one wheel as the other wheel lifts and lowers the other wheel as the one wheel lifts. The lean device is configured such that a vehicle body can be inclined in a left-right direction by driving a lean motor, and therefore, the vehicle can stably turn by driving the lean device so as to incline the vehicle body at the time of turning.

In such a vehicle, a front fork mechanism has been known as a mechanism for steering a wheel with a handlebar. The front fork mechanism includes a pair of right and left blades supporting both sides of the wheel and a crown connecting the pair of right and left blades, and can steer the wheel by steering the crown with the handlebar.

### CITATION LIST

### PATENT LITERATURE

Patent Literature 1: JP-A-2014-69672

### SUMMARY OF INVENTION

### PROBLEMS TO BE SOLVED BY INVENTION

However, since the front fork mechanism directly connects the wheel and the handlebar via the blades, a space cannot be formed between the handlebar and the wheel and there is a problem that the degree of freedom in designing the vehicle is reduced.

An object of the present invention is a vehicle configured so that a space can be formed between a handlebar and a wheel and the degree of freedom in designing the vehicle can be improved.

### SOLUTION TO PROBLEMS

The vehicle of the present invention is a vehicle including a seating portion on which a human body is seated, at least three wheels having a pair of left and right front wheels and a rear wheel, a handlebar that steers the wheels, and a frame supporting the wheels and the handlebar. The vehicle includes a hub center steering mechanism having a pair of left and right swing arms supported by the frame and swinging the front wheels in an up-down direction and a steering link connecting the handlebar and hubs of the front wheels and steering the front wheels based on operation of the handlebar.

According to this configuration, since the vehicle includes the hub center steering mechanism, a space can be formed between the handlebar and the front wheel as compared with a vehicle including a front fork mechanism, and the degree of freedom in designing the vehicle can be improved. For example, the vehicle can be configured such that a storage battery, a control device, or the like is installed in this space. In addition, the designability of the vehicle can also be improved by decorating this space.

In the present invention, the vehicle preferably further includes a control device that controls the vehicle, and a caster angle adjustment mechanism that adjusts the caster angle of a steering shaft of a steered wheel, and the control device includes a traveling state detector that detects the traveling state of the vehicle at the time of forward traveling and turning, and a caster angle adjustment mechanism controller that causes the caster angle adjustment mechanism to adjust and increase the caster angle when the traveling state detector detects the forward traveling of the vehicle, and causes the caster angle adjustment mechanism to adjust and decrease the caster angle when the traveling state detector detects the turning of the vehicle.

According to this configuration, the caster angle adjustment mechanism controller causes the caster angle adjustment mechanism to adjust and increase the caster angle of the steered wheel when the traveling state detector detects the forward traveling of the vehicle, and causes the caster angle adjustment mechanism to adjust and decrease the caster angle of the steered wheel when the traveling state detector detects the turning of the vehicle. Thus, the stability of the vehicle can be improved when the vehicle travels forward, and the mobility thereof can be improved when the vehicle turns.

### BRIEF DESCRIPTION OF DRAWINGS

Fig. 1 is a schematic view showing a three-wheeled motorcycle according to a first embodiment of the present invention.
Fig. 2 is an enlarged perspective view showing a left front wheel.
Fig. 3 is an enlarged perspective view showing the three-wheeled motorcycle with a small caster angle.
Fig. 4 is an enlarged perspective view showing the three-wheeled motorcycle with a large caster angle.
Fig. 5 is an enlarged perspective view of a differential lean mechanism as viewed from the front wheel side.
Fig. 6 is an enlarged perspective view showing operation of the differential lean mechanism.
Fig. 7 is a partial perspective view of the differential lean mechanism as viewed from the right side.
Figs. 8(A) and 8(B) are a view of the differential lean mechanism as viewed from the front side and a sectional view thereof.
Fig. 9 is an enlarged perspective view showing operation of the differential lean mechanism in a state of one wheel being lowered as the other wheel is lifted.
Fig. 10 is a partial perspective view of the differential lean mechanism in a state of a spring holder being moved as viewed from the right side.
Figs. 11(A) and 11(B) are a view of the differential lean mechanism in a state of the spring holder being moved as viewed from the front side and a sectional view thereof.
Fig. 12 is an enlarged perspective view showing operation of the differential lean mechanism in a state in which the spring holder is moved until contacting a stopper and the one wheel is lowered as the other wheel is lifted.
Fig. 13 is a schematic configuration diagram showing an overall configuration of the three-wheeled motorcycle.
Fig. 14 is a partial perspective view of a differential lean mechanism according to a second embodiment of the present invention as viewed from the right side.
Figs. 15(A) and 15(B) are a view of the differential lean mechanism as viewed from the front side and a sectional view thereof.
Fig. 16 is an enlarged perspective view showing operation of the differential lean mechanism in a state of one wheel being lowered as the other wheel is lifted.
Fig. 17 is a partial perspective view of the differential lean mechanism in a state of a spring holder being moved as viewed from the right side.
Fig. 18 is an enlarged perspective view showing operation of the differential lean mechanism in a state of one wheel being lowered as the other wheel is lifted.
Fig. 19 is a partial perspective view of the differential lean mechanism in a state of a spring holder being moved as viewed from the right side.
Fig. 20 is a schematic configuration diagram showing an overall configuration of a three-wheeled motorcycle according to a third embodiment of the present invention.

### DESCRIPTION OF EMBODIMENTS

### [First Embodiment]

In the following, a first embodiment of the present invention will be described with reference to the drawings.

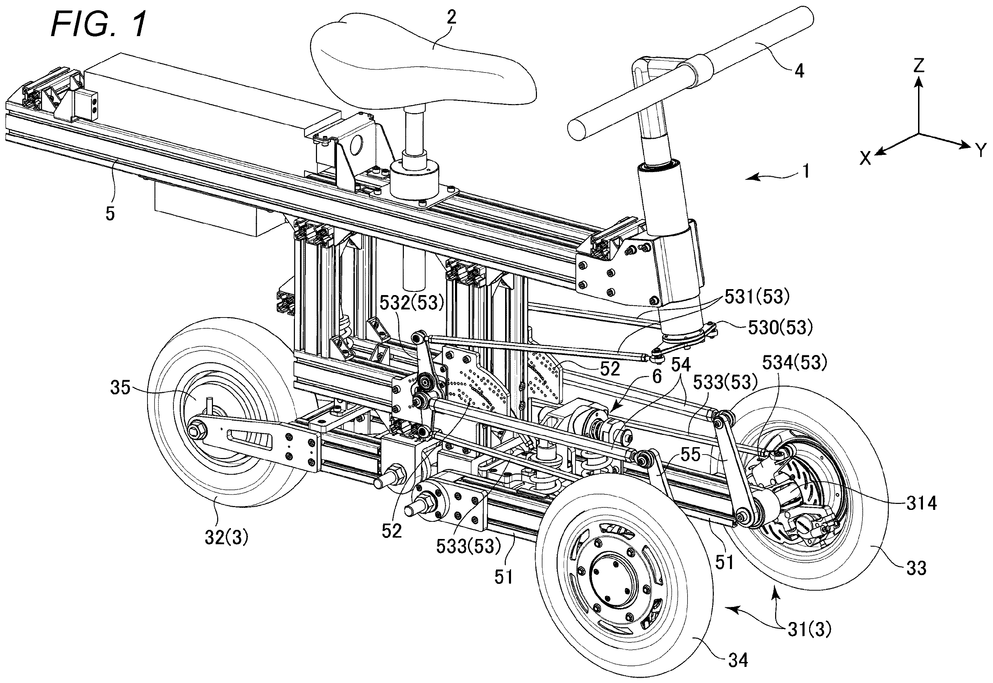

Fig. 1 is a schematic view showing a three-wheeled motorcycle according to the first embodiment of the present invention.

As shown in Fig. 1, the three-wheeled motorcycle 1 is a vehicle including a saddle 2 which is a seating portion on which a human body is seated, three wheels 3, a handlebar 4 that steers the wheels 3, and a frame 5 supporting the wheels 3 and the handlebar 4.

Note that in Fig. 1, a vertical upward direction is defined as a +Z axis direction, and two axes orthogonal to the Z axis are defined as X and Y axes. The same applies to the following drawings.

The wheels 3 include a front wheel 31 attached to the +Y axis direction side of the frame 5 and a rear wheel 32 attached to the -Y axis direction side of the frame 5.

The front wheel 31 includes a left front wheel 33 attached to the -X axis direction side of the frame 5 and a right front wheel 34 attached to the +X axis direction side of the frame 5, and has a pair of left and right two wheels.

The rear wheel 32 is connected to a motor 35 attached to the frame 5. The motor 35 rotates the rear wheel 32, which is a drive wheel, about a rotation axis in response to input made by a rider of the three-wheeled motorcycle 1 operating an accelerator.

Note that in the present embodiment, the wheels 3 includes the pair of left and right two front wheels 31, but may include a pair of left and right two rear wheels. Alternatively, the wheels may include both a pair of left and right two front wheels and a pair of left and right two rear wheels, and the vehicle may include at least three wheels.

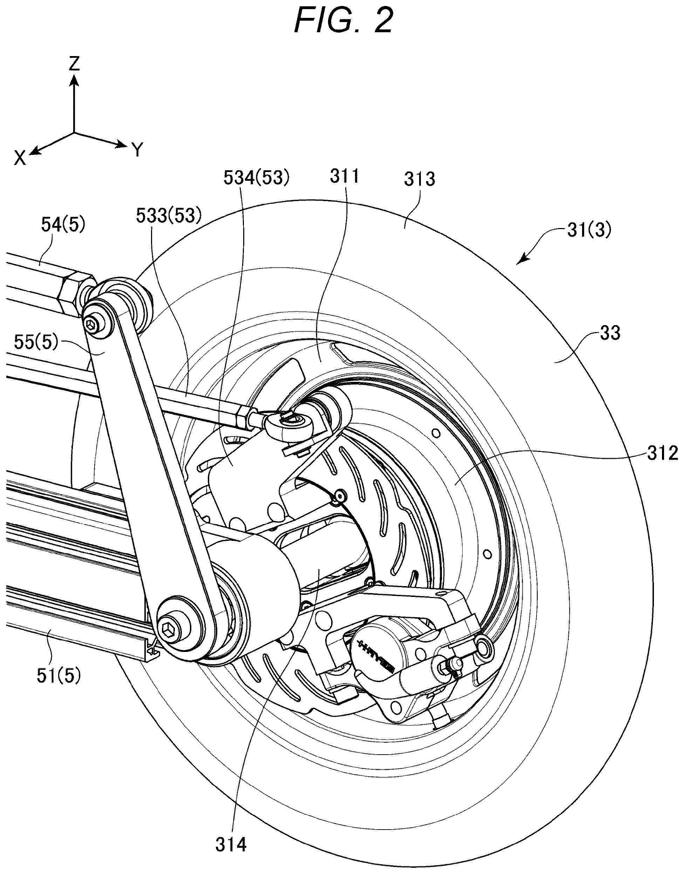

Fig. 2 is an enlarged perspective view showing the left front wheel.

As shown in Fig. 2, the front wheel 31 includes a wheel 311, a hub 312 attached to the center position of the wheel 311 and having a steering shaft (not shown) extending along a radial direction therein, and a tire 313 attached along the outer periphery of the wheel 311.

The steering shaft of the hub 312 is connected to a circular columnar caster variable shaft 314. Thus, the front wheel 31 can change a caster angle, which is the angle of the steering shaft, by rotating the caster variable shaft 314 about the axis.

As shown in Figs. 1 and 2, the frame 5 includes a swing arm 51 formed in a rectangular columnar shape and having a base end portion supported so as to be turnable about the X axis, and the caster variable shaft 314 is inserted into a hole formed in a tip end portion of the swing arm 51 and supported so as to be rotatable about the center axis.

As shown in Fig. 1, the frame 5 includes two setting plates 52 attached to both sides in the X axis direction on the -Z axis direction side of the saddle 2. Each setting plate 52 has a plurality of holes for attaching a steering link 53 that transmits input made by the rider of the three-wheeled motorcycle 1 operating the handlebar 4, and a caster link rod 54 for rotating the caster variable shaft 314 about the X axis.

The steering link 53 includes a steering rod 531 having one end connected to a steering arm 530 attached to the -Z axis direction side end portion of the handlebar 4, a link member 532 having a +Z axis direction side end portion connected to the other end of the steering rod 531 and turnably attached to a hole formed in the setting plate 52, and a tie rod 533 having one end connected to the -Z axis direction side end portion of the link member 532. The other end of the tie rod 533 is connected to the front wheel 31 via a knuckle arm 534.

The input made by the rider of the three-wheeled motorcycle 1 operating the handlebar 4 moves the tie rod 533 back and forth along the Y axis direction via the steering arm 530, the steering rod 531, and the link member 532. Then, the tie rod 533 moves back and forth to transmit the input made by operating the handlebar 4 to the front wheel 31 via the knuckle arm 534, and the front wheel 31 turns around the steering shaft.

As described above, the three-wheeled motorcycle 1 includes a hub center steering mechanism having the pair of left and right swing arms 51 supported by the frame 5 and swinging the front wheels 31 in the up-down direction and the steering link 53 connecting the handlebar 4 and the hubs 312 of the front wheels 31 and steering the front wheels 31 based on the operation of the handlebar 4.

Of the caster link rod 54, a base end portion is attached to a hole formed in the setting plate 52, and a tip end portion is attached to one end of a reaction lever 55. The other end of the reaction lever 55 is connected to an end portion of the caster variable shaft 314 opposite to the front wheel 31. Thus, the caster link rod 54 moves the position of the hole of the setting plate 52 to which the base end portion is attached in the Y axis direction, and in this manner, can change the caster angle by rotating the caster variable shaft 314 via the reaction lever 55.

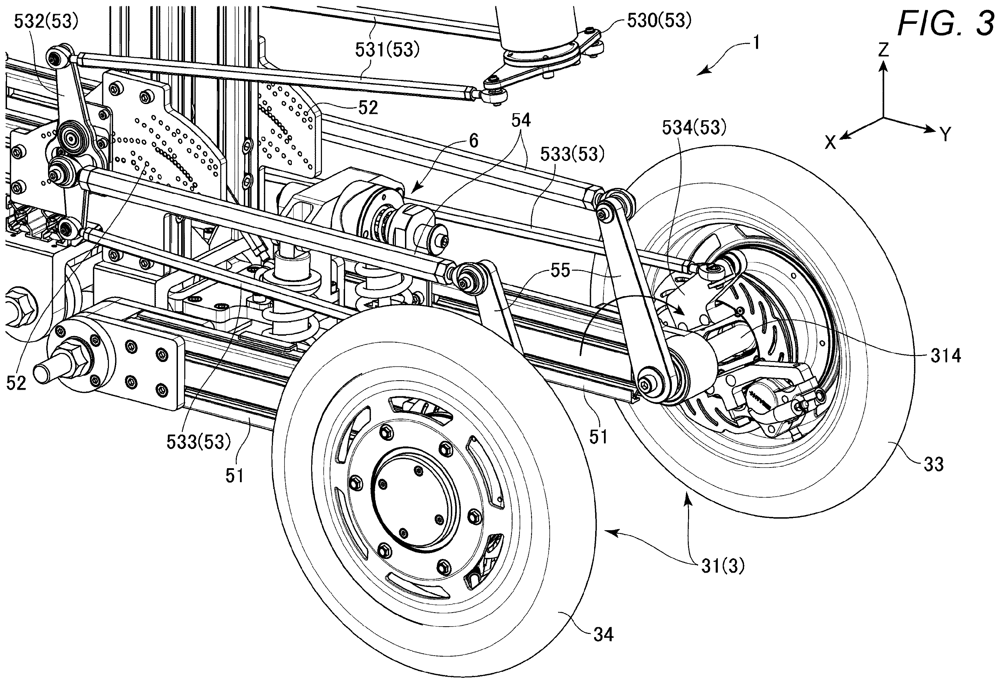

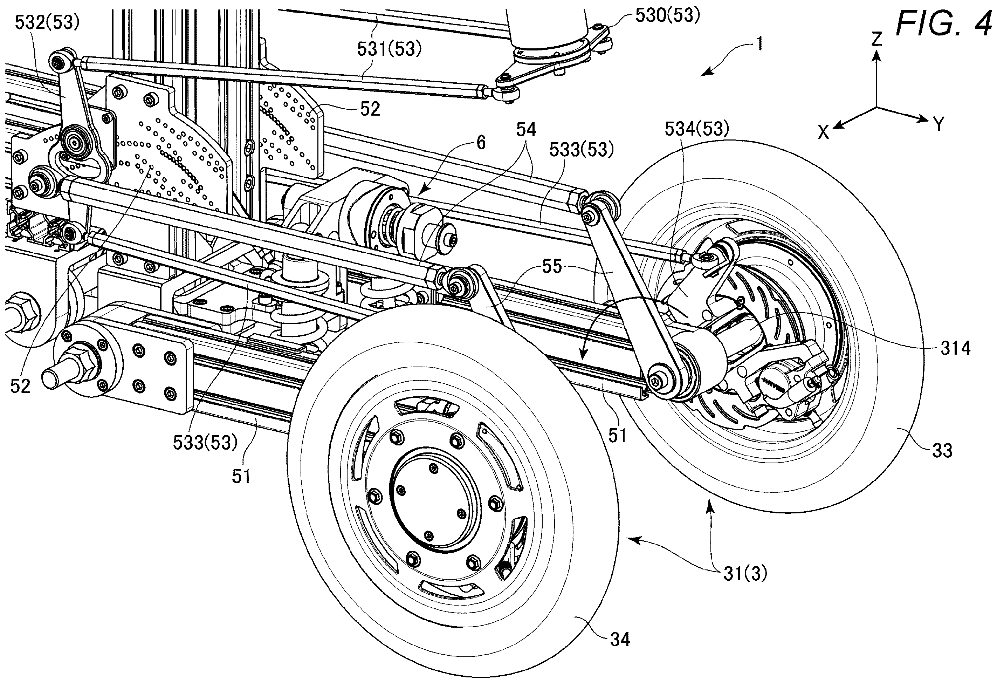

Fig. 3 is an enlarged perspective view showing the three-wheeled motorcycle with a small caster angle. Fig. 4 is an enlarged perspective view showing the three-wheeled motorcycle with a large caster angle.

By moving the position of the hole of the setting plate 52 in the +Y axis direction, the caster link rod 54 can decrease the caster angle by turning the reaction lever 55 about the X axis (see the clockwise arrow in the figure) as shown in Fig. 3, and by moving the position of the hole in the -Y axis direction, can increase the caster angle by turning the reaction lever 55 about the X axis (see the counterclockwise arrow in the figure) as shown in Fig. 4.

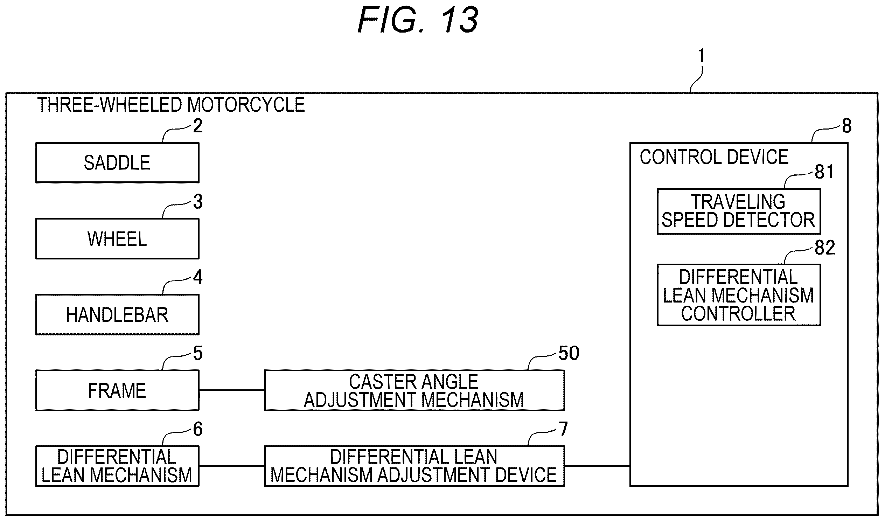

Thus, the setting plate 52, the caster link rod 54, and the reaction lever 55 function as a caster angle adjustment mechanism 50 (see Fig. 13) that adjusts the caster angle of the steering shaft of the steered wheel.

The pair of left and right front wheels 31 includes a differential lean mechanism 6 that lowers one wheel (for example, right front wheel 34) as the other wheel (for example, left front wheel 33) lifts and lowers the other wheel as the one wheel lifts.

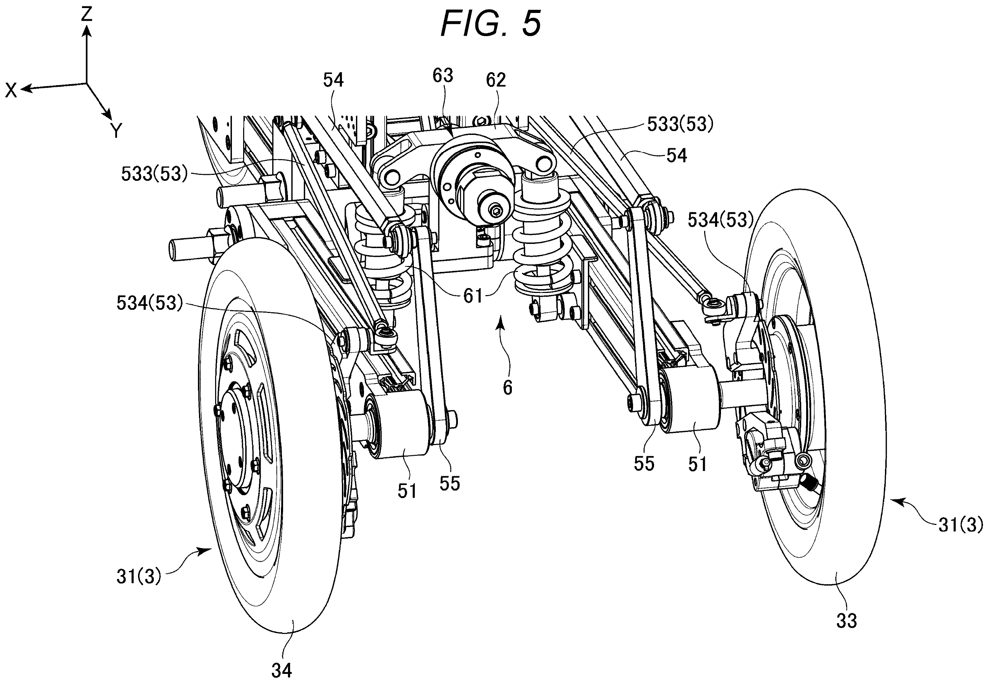

Fig. 5 is an enlarged perspective view of the differential lean mechanism as viewed from the front wheel side.

As shown in Fig. 5, the differential lean mechanism 6 includes a pair of left and right shock absorbers 61 each attached to the pair of left and right swing arms 51, a differential lean link 62 connecting the shock absorbers 61, and a turning mechanism 63 pivotally and turnably supporting the differential lean link 62 on the frame 5 with the center position of the differential lean link 62 in the X axis direction as the center of turning.

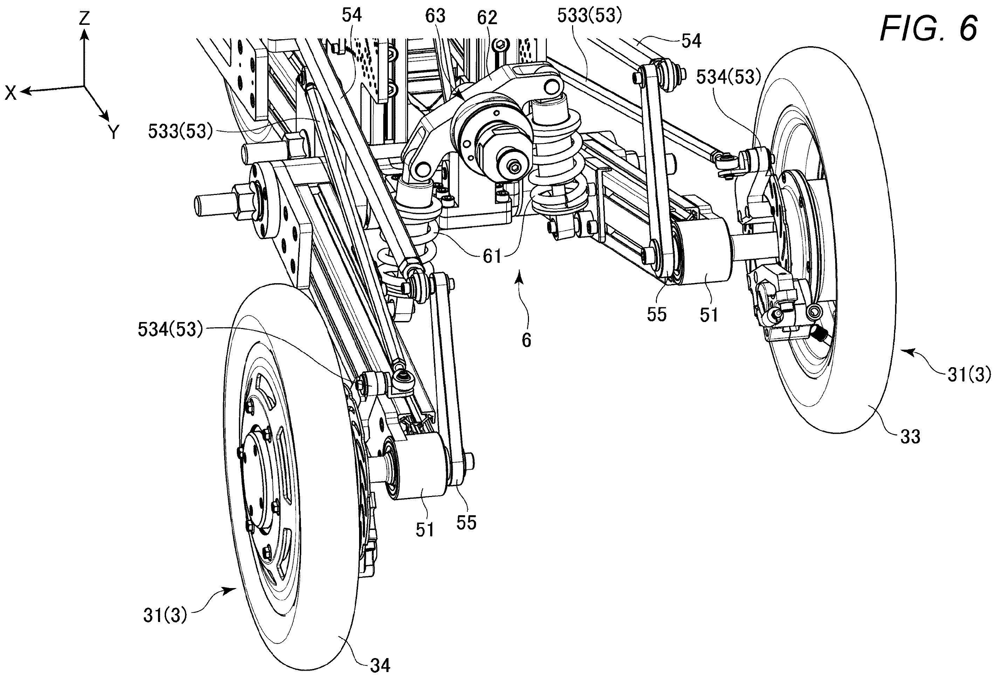

Fig. 6 is an enlarged perspective view showing operation of the differential lean mechanism.

As shown in Fig. 6, the differential lean link 62 turns about the Y axis (counterclockwise in the figure) as the left front wheel 33 which is the other wheel lifts, and can lower the right front wheel 34 which is the one wheel. The differential lean link 62 turns about the Y axis (clockwise in the figure) as the right front wheel 34 which is the one wheel lifts, and can lower the left front wheel 33 which is the other wheel (not shown).

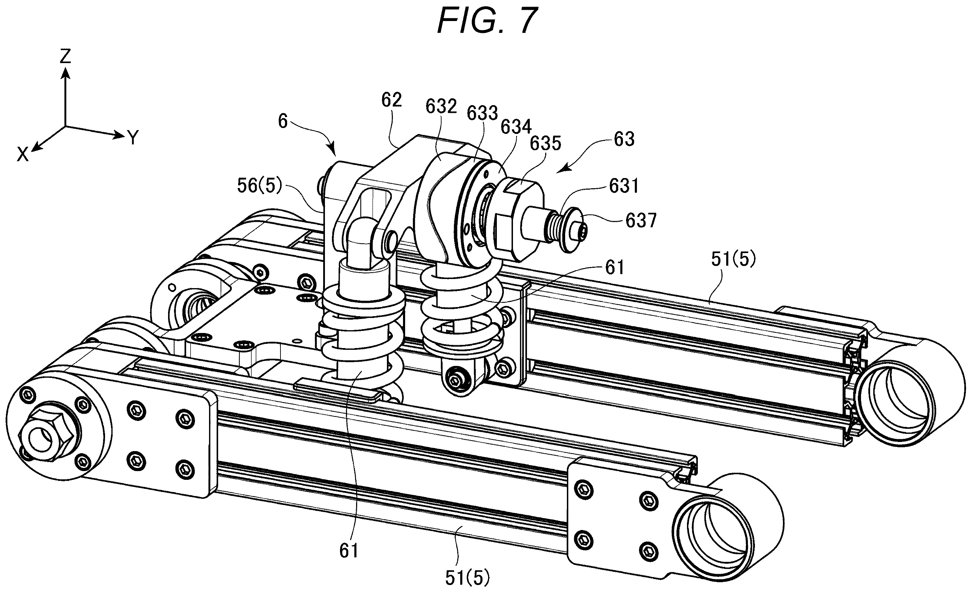

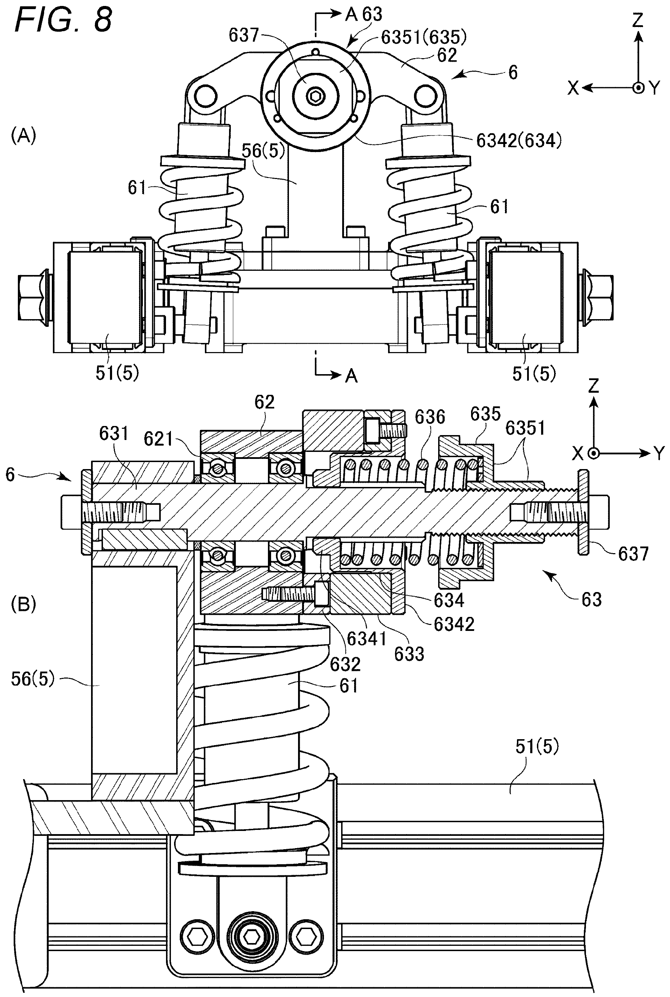

Fig. 7 is a partial perspective view of the differential lean mechanism as viewed from the right side. Fig. 8(A) is a view of the differential lean mechanism as viewed from the front side, and Fig. 8(B) is a sectional view taken along line A-A of Fig. 8(A).

As shown in Figs. 7 and 8, the turning mechanism 63 is inserted into a hole formed in a substantially L-shaped shaft holder 56 attached to the frame 5, and includes a circular columnar shaft 631 (predetermined circular columnar shaft) fixed to the shaft holder 56 (see Fig. 8(B)). As shown in Fig. 8(B), the differential lean link 62 has a round hole formed at the center position thereof, and is pivotally and turnably supported by inserting the shaft 631 into the differential lean link 62 via a bearing 621. In other words, the differential lean link 62 is turnable about the center axis of the shaft 631. The differential lean link 62 is turnably attached to the shaft 631, and has one end connected to the one wheel via the swing arm 51 and the other end connected to the other wheel via the swing arm 51.

As shown in Figs. 7 and 8, the turning mechanism 63 includes an annular first cam 632 inserted into the shaft 631 and fixed to the differential lean link 62 so as to be coaxial with the shaft 631, and an annular second cam 633 inserted into the shaft 631 and fitted in the first cam 632.

Further, the turning mechanism 63 includes a cylindrical slider 634 inserted into the shaft 631 and fixed to the second cam 633, a cylindrical spring holder 635 inserted into the shaft 631 and attached adjacent to the slider 634, a spring 636 (see Fig. 8(B)) inserted into the shaft 631 and sandwiched between the slider 634 and the spring holder 635, and a disk-shaped stopper 637 attached to the +Y axis direction side end surface of the shaft 631.

As shown in Fig. 7, the first cam 632 has an end surface formed in a wave shape on the +Y axis direction side (second cam 633 side). As described above, since the first cam 632 is fixed to the differential lean link 62 so as to be coaxial with the shaft 631, the first cam 632 turns about the center axis of the shaft 631 along with turning of the differential lean link 62.

The second cam 633 has an end surface formed in a wave shape corresponding to the wave-shaped end surface of the first cam 632 on the -Y axis direction side (first cam 632 side), and is fitted in the first cam 632.

As shown in Fig. 8(B), the slider 634 has an outer diameter slightly smaller than the inner diameter of the first cam 632 and the inner diameter of the second cam 633, and is inserted into the first cam 632 and the second cam 633. The slider 634 has a slide fitting portion 6341 formed at the -Y axis direction side end portion and slide-fitted in a key groove formed in the outer peripheral surface of the shaft 631, and a flange portion 6342 formed at the +Y axis direction side end portion and fixed to the second cam 633.

Thus, the second cam 633 and the slider 634 are attached to the shaft 631 so as to slide integrally along the axial direction of the shaft 631 by moving the slide fitting portion 6341 along the key groove of the shaft 631. In other words, the slider 634 and the key groove of the shaft 631 function as a movement mechanism that moves the position of the second cam 633 along the shaft 631.

As described above, the differential lean mechanism 6 includes the annular first cam 632 (first cam portion) turnably attached to the shaft 631 and integrally turning with the differential lean link 62, the annular second cam 633 (second cam portion) non-rotatably attached to the shaft 631 and fitted in the first cam 632, and the slider 634 (movement mechanism) that moves the position of the second cam 633 along the shaft 631. The first cam 632 and the second cam 633 are fitted by fitting the wave-shaped end surfaces (corrugated surfaces) corresponding to each other.

Note that in the present embodiment, the first cam portion and the second cam portion are fitted by fitting the wave-shaped end surfaces corresponding to each other. However, the first cam portion and the second cam portion may merely have inclined surfaces, and may have any shape as long as the first cam portion and the second cam portion are fitted by fitting the corrugated surfaces corresponding to each other.

The spring holder 635 has an inner diameter substantially the same as the inner diameter of the slider 634. The spring holder 635 has a screwing portion 6351 formed at the +Y axis direction side end portion and having an internal thread to be screwed with an external thread formed on the +Y axis side outer peripheral surface of the shaft 631.

Thus, the spring holder 635 is attached to the shaft 631 so as to move along the axial direction of the shaft 631 by being rotated about the axis of the shaft 631. Note that the stopper 637 has a function of preventing the spring holder 635 from dropping by restricting movement of the spring holder 635 toward the +Y axis direction side.

The spring 636 is disposed between the outer periphery of the shaft 631, the inner periphery of the slider 634, and the inner periphery of the spring holder 635. The spring 636 is sandwiched between the slide fitting portion 6341 of the slider 634 and the screwing portion 6351 of the spring holder 635.

Thus, the spring 636 is compressed by sliding of the second cam 633 and the slider 634 toward the +Y axis direction side and movement of the spring holder 635 toward the -Y axis direction side, and is extended by sliding of the second cam 633 and the slider 634 toward the -Y axis direction side and movement of the spring holder 635 toward the +Y axis direction side.

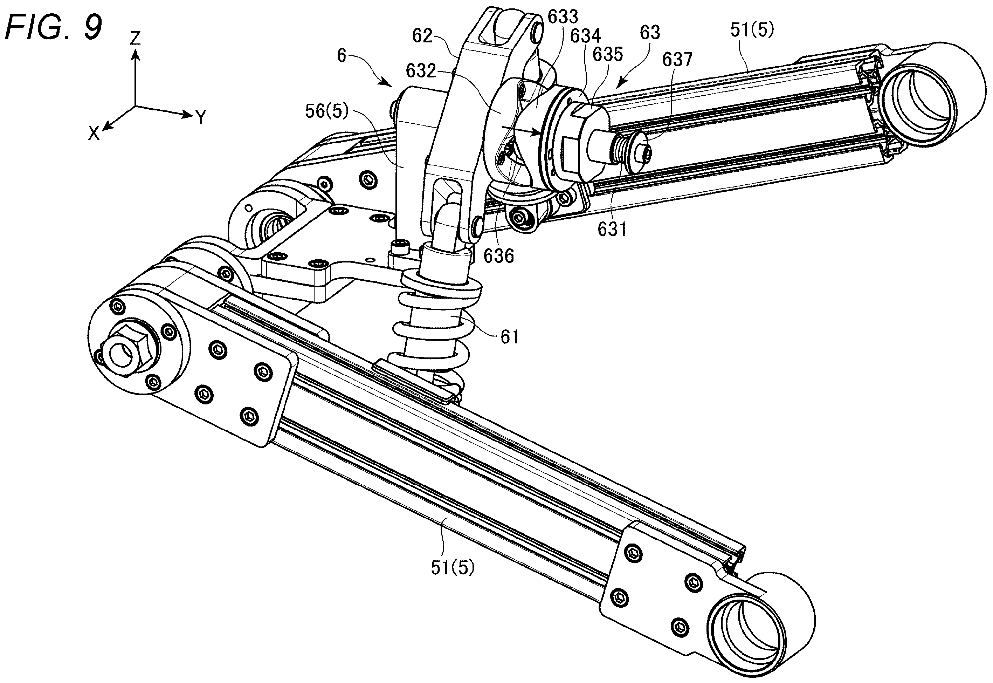

Fig. 9 is an enlarged perspective view showing operation of the differential lean mechanism in a state of the one wheel being lowered as the other wheel is lifted.

For example, as shown in Fig. 9, the differential lean link 62 can turn about the Y axis as the swing arm 51 (swing arm 51 on the -X axis direction side in the figure) of the left front wheel 33 which is the other wheel lifts, and can lower the swing arm 51 (swing arm 51 on the +X axis direction side in the figure) of the right front wheel 34 which is the one wheel.

The first cam 632 turns about the center axis of the shaft 631 as the differential lean link 62 turns. Here, since the first cam 632 and the second cam 633 have the wave-shaped end surfaces fitted in each other, the second cam 633 and the slider 634 integrally slide toward the +Y axis direction side along the axial direction of the shaft 631 along with turning of the first cam 632 (see an arrow in the figure). Then, the spring 636 is compressed by sliding of the second cam 633 and the slider 634 toward the +Y axis direction side.

Thus, the differential lean link 62 can turn against the elastic force of the spring 636.

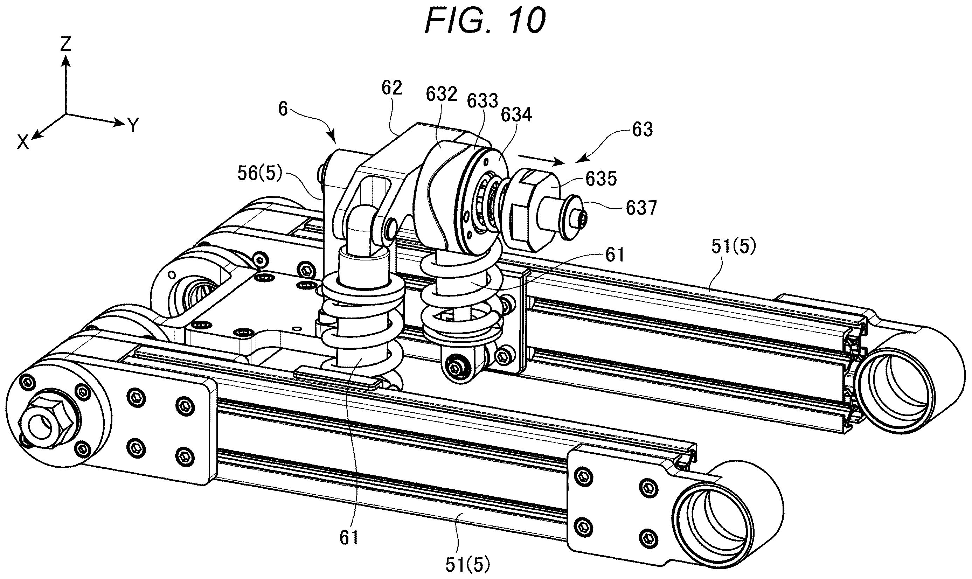

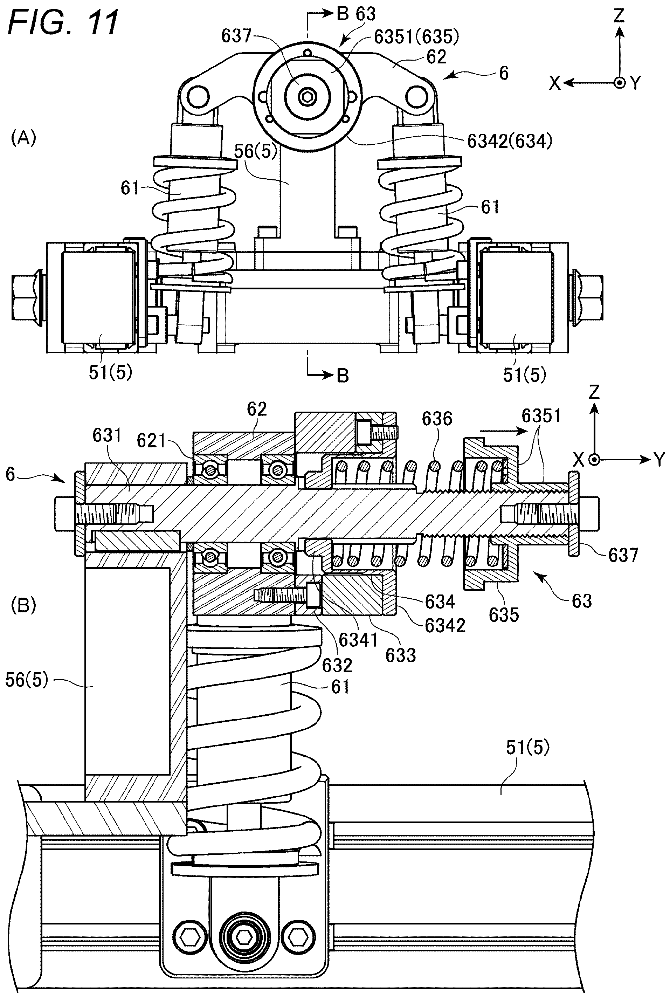

Fig. 10 is a partial perspective view of the differential lean mechanism in a state of the spring holder being moved as viewed from the right side. Fig. 11(A) is a view of the differential lean mechanism in a state of the spring holder being moved as viewed from the front side, and Fig. 11(B) is a sectional view taken along line A-A of Fig. 11(A).

Since the spring holder 635 is attached to the shaft 631 so as to move along the axial direction of the shaft 631 by being rotated about the axis of the shaft 631, the spring holder 635 can be moved until contacting the stopper 637 as shown in Figs. 10 and 11.

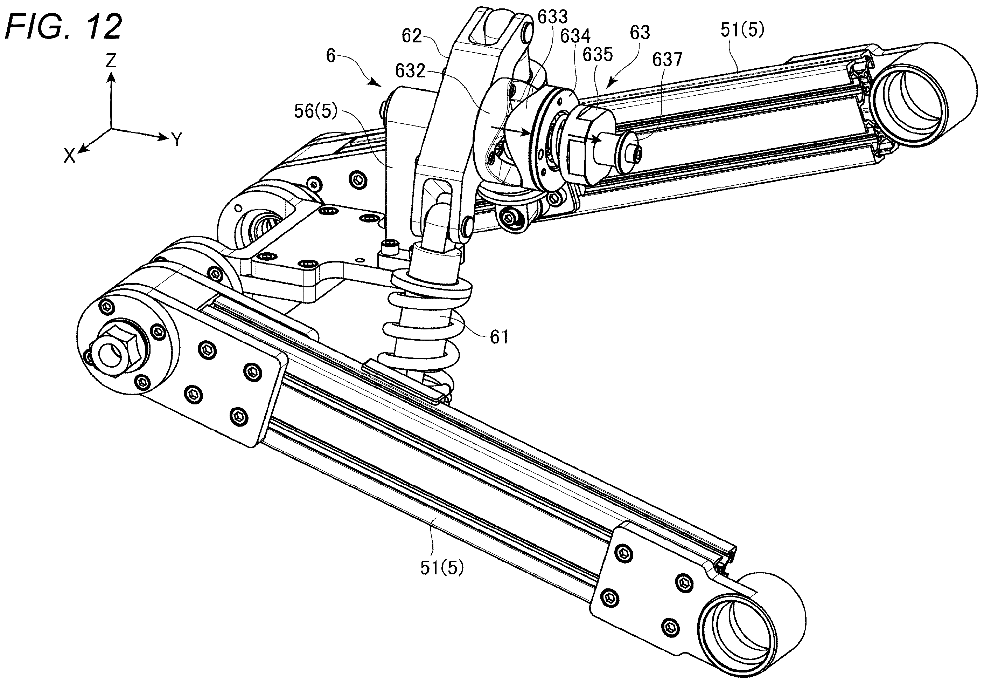

Fig. 12 is an enlarged perspective view showing operation of the differential lean mechanism in a state in which the spring holder is moved until contacting the stopper and the one wheel is lowered as the other wheel is lifted.

For example, as shown in Fig. 12, the differential lean link 62 can turn about the Y axis as the swing arm 51 (swing arm 51 on the -X axis direction side in the figure) of the left front wheel 33 which is the other wheel lifts, and can lower the swing arm 51 (swing arm 51 on the +X axis direction side in the figure) of the right front wheel 34 which is the one wheel.

The first cam 632 turns about the center axis of the shaft 631 as the differential lean link 62 turns. Here, since the first cam 632 and the second cam 633 have the wave-shaped end surfaces fitted in each other, the second cam 633 and the slider 634 integrally slide toward the +Y axis direction side along the axial direction of the shaft 631 along with turning of the first cam 632. Then, the spring 636 is compressed by sliding of the second cam 633 and the slider 634 toward the +Y axis direction side.

Thus, the differential lean link 62 can turn against the elastic force of the spring 636.

Here, since the spring 636 is extended by movement of the spring holder 635 toward the +Y axis direction side as described above, the differential lean link 62 can turn against the elastic force of the spring 636 which becomes smaller than that in a state of the spring holder 635 being moved toward the -Y axis direction side.

In other words, by moving the spring holder 635 toward the +Y axis direction side, the damping force of the differential lean mechanism 6 can be decreased, and by moving the spring holder 635 to the -Y axis direction side, the damping force of the differential lean mechanism 6 can be increased. Thus, the spring holder 635 functions as part of a differential lean mechanism adjustment device 7 (see Fig. 13) that adjusts the damping force of the differential lean mechanism 6.

As described above, in the present embodiment, the differential lean mechanism adjustment device 7 includes the spring 636 (biasing unit) that biases the second cam 633 toward the first cam 632 and the spring holder 635 (adjustment unit) that adjusts the biasing force of the spring 636.

Note that in the present embodiment, the differential lean mechanism adjustment device includes the biasing unit and the adjustment unit to adjust the damping force of the differential lean mechanism. However, other structures may be adopted as long as the damping force of the differential lean mechanism can be adjusted.

Fig. 13 is a schematic configuration diagram showing an overall configuration of the three-wheeled motorcycle.

As shown in Fig. 13, the three-wheeled motorcycle 1 includes not only the saddle 2, the three wheels 3, the handlebar 4, the frame 5, the differential lean mechanism 6, and the differential lean mechanism adjustment device 7, but also a control device 8 that controls the three-wheeled motorcycle 1.

The control device 8 includes a traveling speed detector 81 and a differential lean mechanism controller 82.

The traveling speed detector 81 detects the traveling speed of the three-wheeled motorcycle 1, for example, by detecting the rotation speed of the motor 35.

Note that in the present embodiment, the traveling speed detector 81 detects the traveling speed of the three-wheeled motorcycle 1 by detecting the rotation speed of the motor 35, but the traveling speed of the three-wheeled motorcycle 1 may be detected by other methods such as a method of detecting the number of rotations of the motor 35.

When the traveling speed detected by the traveling speed detector 81 is high, the differential lean mechanism controller 82 causes the differential lean mechanism adjustment device 7 to adjust and decrease the damping force of the differential lean mechanism 6. When the traveling speed detected by the traveling speed detector 81 is low, the differential lean mechanism controller 82 causes the differential lean mechanism adjustment device 7 to adjust and increase the damping force of the differential lean mechanism 6. Specifically, the three-wheeled motorcycle 1 includes a driver (not shown) that turns the spring holder 635, and the differential lean mechanism controller 82 adjusts the damping force of the differential lean mechanism 6 by turning the spring holder 635 by the driver and moving the spring holder 635 along the Y axis direction.

According to the present embodiment as described above, the following operations and advantageous effects can be achieved.
(1) The differential lean mechanism controller 82 causes the differential lean mechanism adjustment device 7 to adjust and decrease the damping force of the differential lean mechanism 6 when the traveling speed detected by the traveling speed detector 81 is high, and causes the differential lean mechanism adjustment device 7 to adjust and increase the damping force of the differential lean mechanism 6 when the traveling speed detected by the traveling speed detector 81 is low. Thus, the three-wheeled motorcycle 1 can improve operability when traveling at high speed and can be made less prone to fall down when traveling at low speed. In addition, by extremely greatly adjusting the damping force of the differential lean mechanism 6, the three-wheeled motorcycle 1 can stand by itself when stopped without limiting the maximum inclination angle at the time of leaning to be a certain angle.
(2) Since the differential lean mechanism adjustment device 7 includes the spring 636 that biases the second cam 633 toward the first cam 632 and the spring holder 635 that adjusts the biasing force of the spring 636, the damping force of the differential lean mechanism 6 can be adjusted and increased by increasing the biasing force of the spring 636, and the damping force of the differential lean mechanism 6 can be adjusted and decreased by decreasing the biasing force of the spring 636.
(3) Since the three-wheeled motorcycle 1 includes the hub center steering mechanism, a space can be formed between the handlebar 4 and the front wheel 31 as compared with a vehicle including a front fork mechanism, and the degree of freedom in designing the vehicle can be improved. For example, the three-wheeled motorcycle 1 can be configured such that a storage battery, the control device 8, or the like is installed in this space. In addition, the designability of the three-wheeled motorcycle 1 can also be improved by decorating this space.

### [Second Embodiment]

Hereinafter, a second embodiment of the present invention will be described with reference to the drawings.

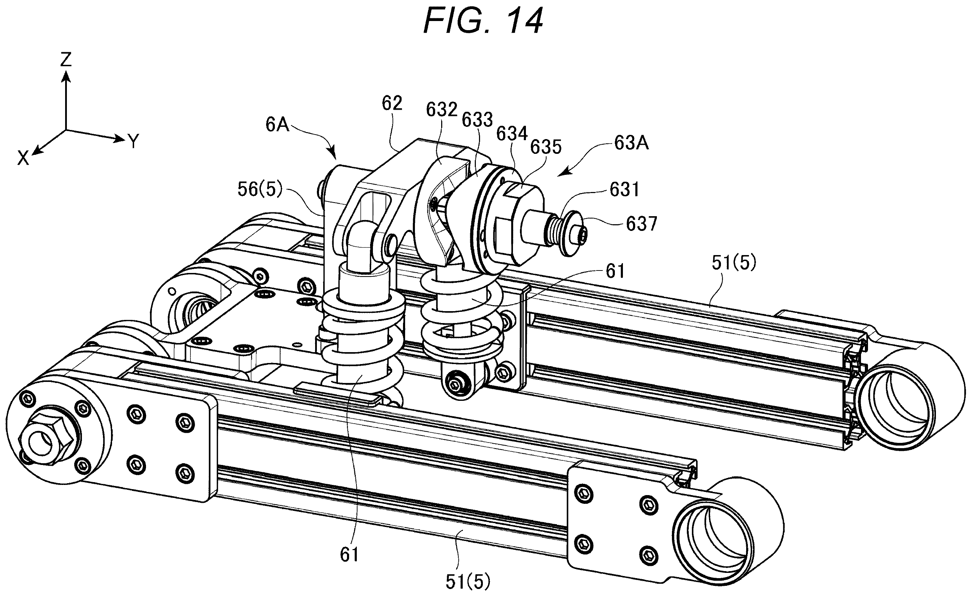

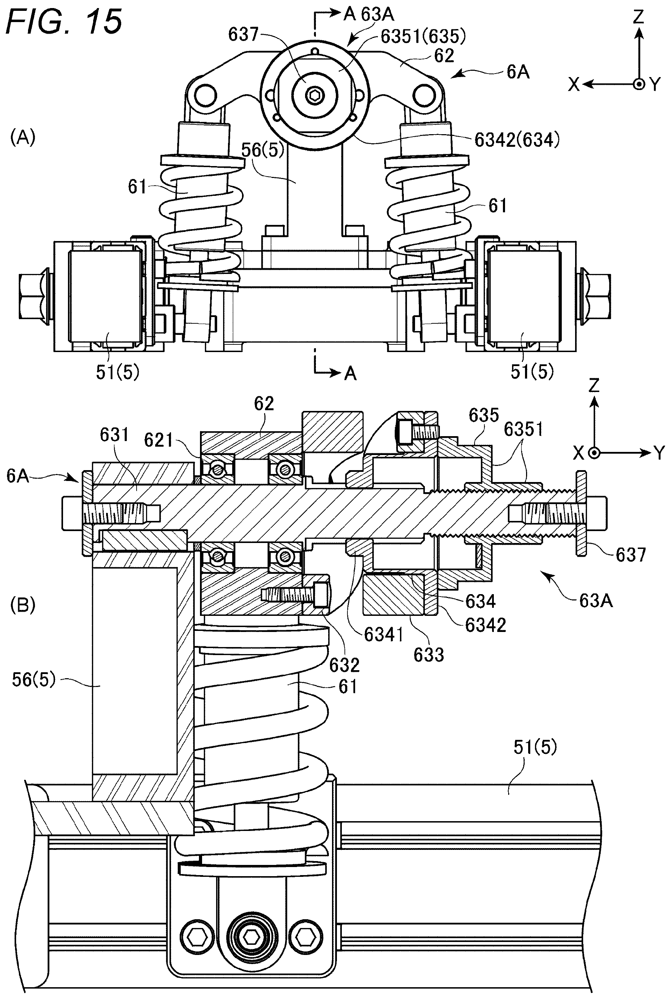

Fig. 14 is a partial perspective view of a differential lean mechanism according to the second embodiment of the present invention as viewed from the right side. Fig. 15(A) is a view of the differential lean mechanism as viewed from the front side, and Fig. 15(B) is a sectional view taken along line A-A of Fig. 15(A).

In the first embodiment, the differential lean mechanism 6 includes the turning mechanism 63, and the turning mechanism 63 includes the spring 636.

On the other hand, the present embodiment is different from the first embodiment in that a differential lean mechanism 6A includes a turning mechanism 63A and the turning mechanism 63A includes no spring as shown in Figs. 14 and 15.

Note that in the following description, the components already described are denoted by the same reference numerals, and the description is omitted.

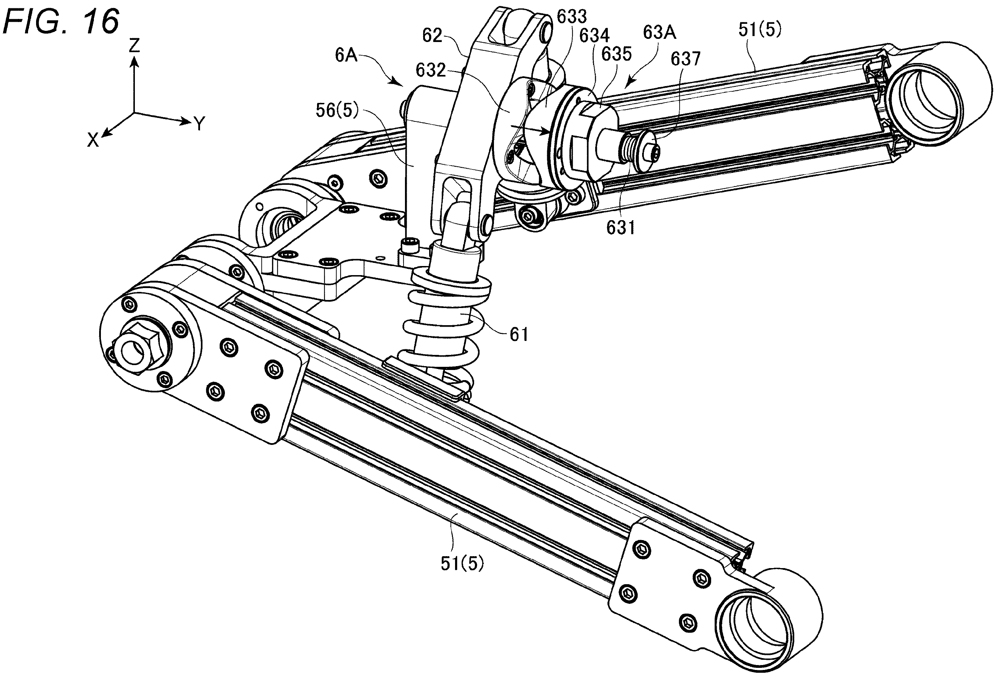

Fig. 16 is an enlarged perspective view showing operation of the differential lean mechanism in a state of the one wheel being lowered as the other wheel is lifted.

For example, as shown in Fig. 16, the differential lean link 62 can turn about the Y axis as the swing arm 51 (swing arm 51 on the -X axis direction side in the figure) of the left front wheel 33 which is the other wheel lifts, and can lower the swing arm 51 (swing arm 51 on the +X axis direction side in the figure) of the right front wheel 34 which is the one wheel.

The first cam 632 turns about the center axis of the shaft 631 as the differential lean link 62 turns. Here, since the first cam 632 and the second cam 633 have the wave-shaped end surfaces fitted in each other, the second cam 633 and the slider 634 integrally slide toward the +Y axis direction side along the axial direction of the shaft 631 along with turning of the first cam 632 (see an arrow in the figure). Movement of the second cam 633 and the slider 634 toward the +Y axis direction side is restricted by contact with the spring holder 635. Thus, the spring holder 635 functions as a restriction unit that restricts movement of the second cam 633 in a direction away from the first cam 632.

Note that in the present embodiment, the spring holder 635 does not hold the spring, but may hold the spring as in the first embodiment.

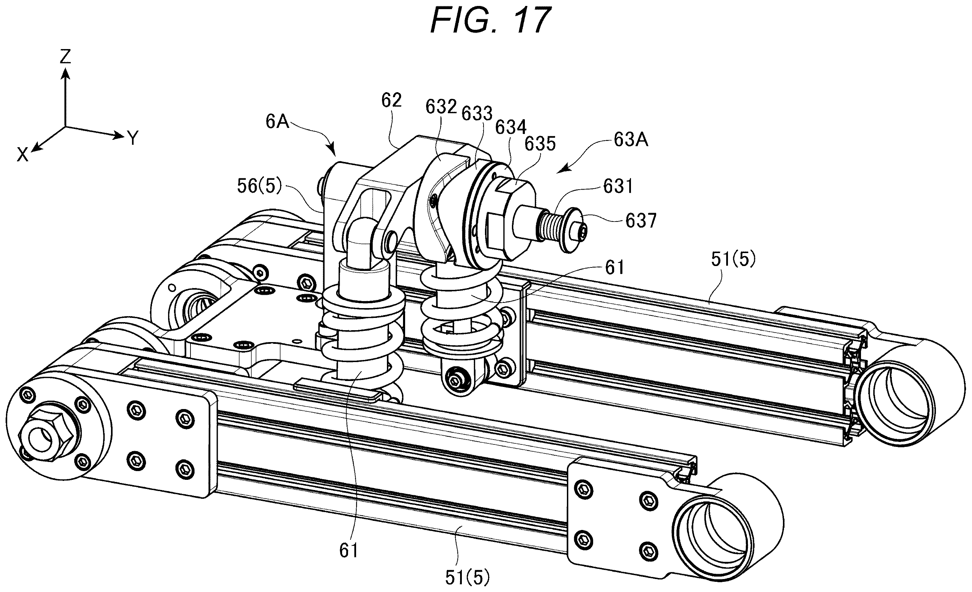

Fig. 17 is a partial perspective view of the differential lean mechanism in a state of the spring holder being moved as viewed from the right side.

Since the spring holder 635 is attached to the shaft 631 so as to move along the axial direction of the shaft 631 by being rotated about the axis of the shaft 631, the spring holder 635 can be moved in a direction toward the first cam 632 as shown in Fig. 17.

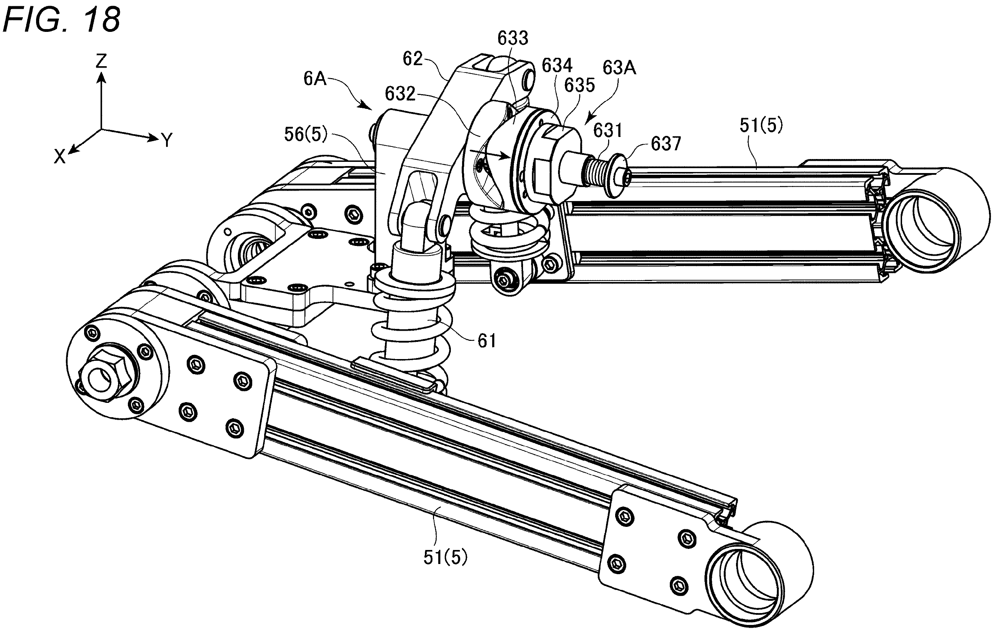

Fig. 18 is an enlarged perspective view showing operation of the differential lean mechanism in a state of the one wheel being lowered as the other wheel is lifted.

For example, as shown in Fig. 18, the differential lean link 62 can turn about the Y axis as the swing arm 51 (swing arm 51 on the -X axis direction side in the figure) of the left front wheel 33 which is the other wheel lifts, and can lower the swing arm 51 (swing arm 51 on the +X axis direction side in the figure) of the right front wheel 34 which is the one wheel.

The first cam 632 turns about the center axis of the shaft 631 as the differential lean link 62 turns. Here, since the first cam 632 and the second cam 633 have the wave-shaped end surfaces fitted in each other, the second cam 633 and the slider 634 integrally slide toward the +Y axis direction side along the axial direction of the shaft 631 along with turning of the first cam 632 (see an arrow in the figure). Movement of the second cam 633 and the slider 634 toward the +Y axis direction side is restricted by contact with the spring holder 635. Here, in the example of Fig. 18, since the spring holder 635 is moved in the direction toward the first cam 632, the maximum inclination angle at the time of leaning is smaller than that in the example of Fig. 16.

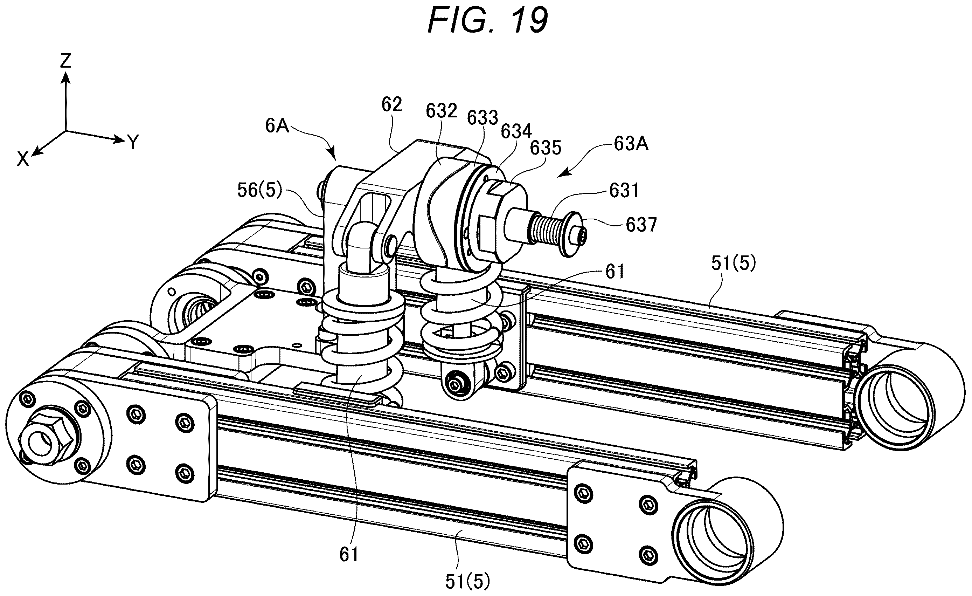

Fig. 19 is a partial perspective view of the differential lean mechanism in a state of the spring holder being moved as viewed from the right side.

Since the spring holder 635 is attached to the shaft 631 so as to move along the axial direction of the shaft 631 by being rotated about the axis of the shaft 631, the spring holder 635 can be moved until the second cam 633 is fitted in the first cam 632 as shown in Fig. 19. Thus, in the present embodiment, the spring holder 635 is configured so that a position where movement of the second cam 633 is restricted can be restricted to a position where the second cam 633 is fitted in the first cam 632.

Note that in the present embodiment, the spring holder 635 is configured so that the position where movement of the second cam 633 is restricted can be restricted to the position where the second cam 633 is fitted in the first cam 632. However, the spring holder 635 is not necessarily configured such that the position where movement of the second cam 633 is restricted can be restricted to the position where the second cam 633 is fitted in the first cam 632.

According to the present embodiment as described above, in addition to the same operations and effects as those of (3) in the first embodiment, the following operations and effects can be achieved.

(4) Since the differential lean mechanism 6A includes the spring holder 635 that restricts movement of the second cam 633 in the direction away from the first cam 632, a clearance in the fitting portion of the first cam 632 and the second cam 633 can be reduced by bringing the position where movement of the second cam 633 is restricted by the spring holder 635 close to the first cam 632, and the clearance in the fitting portion of the first cam 632 and the second cam 633 can be expanded by separating the position where movement of the second cam 633 is restricted by the spring holder 635 from the first cam 632. Thus, the differential lean mechanism 6A can adjust the maximum inclination angle at the time of leaning.

(5) Since the spring holder 635 is configured so that the position where movement of the second cam 633 is restricted can be restricted to the position where the second cam 633 is fitted in the first cam 632, the clearance in the fitting portion of the first cam 632 and the second cam 633 can be eliminated, and turning of the differential lean link 62 can be locked.

### [Third Embodiment]

Hereinafter, a third embodiment of the present invention will be described with reference to the drawings.

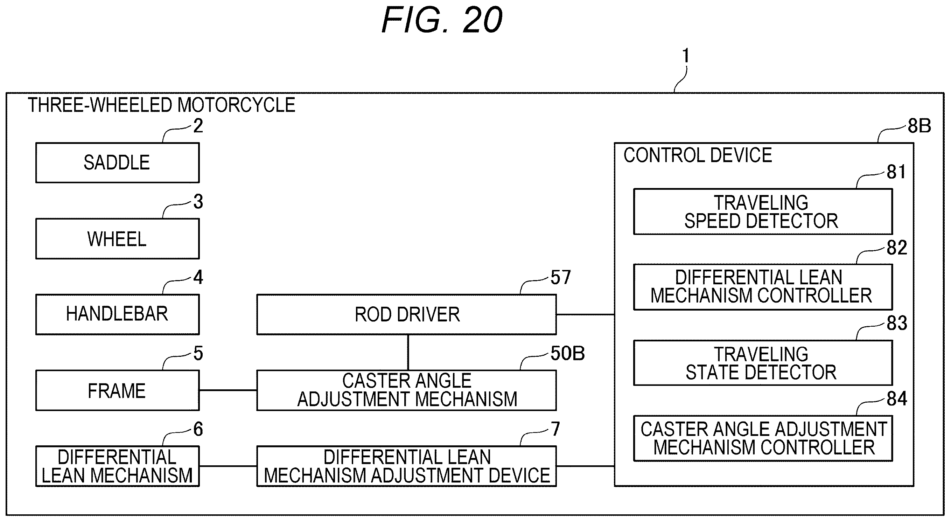

Fig. 20 is a schematic configuration diagram showing an overall configuration of a three-wheeled motorcycle according to the third embodiment of the present invention.

In the first embodiment, the caster angle adjustment mechanism 50 adjusts the caster angle of the steering shaft of the steered wheel by moving the position of the hole of the setting plate 52 to which the caster link rod 54 is attached in the Y axis direction. Moreover, the control device 8 includes the traveling speed detector 81 and the differential lean mechanism controller 82.

On the other hand, in the present embodiment, as shown in Fig. 20, a caster angle adjustment mechanism 50B is different from that of the first embodiment in that a rod driver 57 that moves the caster link rod 54 along the Y axis direction is provided and the rod driver 57 moves the caster link rod 54 in the Y axis direction to adjust the caster angle of the steering shaft of the steered wheel. Moreover, the present embodiment is different from the first embodiment in that a control device 8B includes a traveling state detector 83 and a caster angle adjustment mechanism controller 84.

The traveling state detector 83 detects, for example, the traveling state of the three-wheeled motorcycle 1 at the time of traveling forward and turning by detecting the rotation angle of the handlebar 4.

Note that in the present embodiment, the traveling state detector 83 detects the traveling state of the three-wheeled motorcycle 1 at the time of traveling forward and turning by detecting the rotation angle of the handlebar 4. However, the traveling state of the three-wheeled motorcycle 1 at the time of traveling forward and turning may be detected by other methods such as a method of detecting an angular velocity with a gyro sensor.

The caster angle adjustment mechanism controller 84 causes the caster angle adjustment mechanism 50B to adjust and increase the caster angle by moving the caster link rod 54 in the -Y axis direction by the rod driver 57 when the traveling state detector 83 detects forward traveling of the three-wheeled motorcycle 1, and causes the caster angle adjustment mechanism 50B to adjust and decrease the caster angle by moving the caster link rod 54 in the +Y axis direction by the rod driver 57 when the traveling state detector 83 detects turning of the three-wheeled motorcycle 1.

According to the present embodiment as described above, in addition to the same operations and effects as those of the first embodiment, the following operations and effects can be achieved.

(6) The caster angle adjustment mechanism controller 84 causes the caster angle adjustment mechanism 50B to adjust and increase the caster angle of the steered wheel when the traveling state detector 83 detects forward traveling of the three-wheeled motorcycle 1, and causes the caster angle adjustment mechanism 50B to adjust and decrease the caster angle of the steered wheel when the traveling state detector 83 detects turning of the three-wheeled motorcycle 1. Thus, the stability of the three-wheeled motorcycle 1 can be improved when the three-wheeled motorcycle 1 travels forward, and the mobility thereof can be improved when the three-wheeled motorcycle 1 turns.

### [Modifications of Embodiments]

Note that the present invention is not limited to the foregoing embodiment, and modifications, improvements, and the like within a scope in which the object of the present invention can be achieved are included in the present invention.

For example, in the above embodiments, the spring holder 635 functions as the restriction unit that restricts movement of the second cam 633 in the direction away from the first cam 632, but the differential lean mechanism does not necessarily include the restriction unit that restricts movement of the second cam portion in the direction away from the first cam portion.

Moreover, in the above embodiments, the three-wheeled motorcycle 1 includes the differential lean mechanism adjustment device 7 that adjusts the damping force of the differential lean mechanism 6, but the vehicle does not necessarily include the differential lean mechanism adjustment device.

### INDUSTRIAL APPLICABILITY

As described above, the present invention can be suitably used for a vehicle including at least three wheels.

### LIST OF REFERENCE SIGNS

- 1: Three-wheeled motorcycle
- 2: Saddle (seating portion)
- 3: Wheel
- 4: Handlebar
- 5: Frame
- 6, 6A: Differential lean mechanism
- 7: Differential lean mechanism adjustment device
- 8, 8B: Control device
- 31: Front wheel
- 32: Rear wheel
- 50, 50B: Caster angle adjustment mechanism
- 51: Swing arm
- 52: Setting plate
- 53: Steering link
- 54: Caster link rod
- 55: Reaction lever
- 56: Shaft holder
- 57: Rod driver
- 61: Shock absorber
- 62: Differential lean link
- 63, 63A: Turning mechanism
- 81: Traveling speed detector
- 82: Differential lean mechanism controller
- 83: Traveling state detector
- 84: Caster angle adjustment mechanism controller
- 311: Wheel
- 312: Hub
- 313: Tire
- 314: Caster variable shaft
- 530: Steering arm
- 531: Steering rod
- 532: Link member
- 533: Tie rod
- 534: Knuckle arm
- 621: Bearing
- 631: Shaft (predetermined circular columnar shaft)
- 632: First cam (first cam portion)
- 633: Second cam (second cam portion)
- 634: Slider (movement mechanism)
- 635: Spring holder (adjustment unit, restriction unit)
- 636: Spring (biasing unit)
- 637: Stopper
- 6341: Slide fitting portion
- 6342: Flange portion
- 6351: Screwing portion

## Claims

1. A vehicle including a seating portion on which a human body is seated, at least three wheels having a pair of left and right front wheels and a rear wheel, a handlebar that steers the wheels, and a frame supporting the wheels and the handlebar, the vehicle comprising:
a hub center steering mechanism having a pair of left and right swing arms supported by the frame and swinging the front wheels in an up-down direction and a steering link connecting the handlebar and hubs of the front wheels and steering the front wheels based on operation of the handlebar.

2. The vehicle according to claim 1, further comprising:
a control device that controls the vehicle; and
a caster angle adjustment mechanism that adjusts a caster angle of a steering shaft of a steered wheel,
wherein the control device includes
a traveling state detector that detects a traveling state of the vehicle at a time of forward traveling and turning, and
a caster angle adjustment mechanism controller that causes the caster angle adjustment mechanism to adjust and increase the caster angle when the traveling state detector detects the forward traveling of the vehicle, and causes the caster angle adjustment mechanism to adjust and decrease the caster angle when the traveling state detector detects the turning of the vehicle.
